# EUROPÄISCHE PATENTSCHRIFT

(11) **EP 0 915 800 B1**
(45) Veröffentlichungstag und Bekanntmachung des Hinweises auf die Patenterteilung: **27.08.2003**
(21) Anmeldenummer: 98933552.6
(22) Anmeldetag: 15.05.1998
(51) Int. Cl.: B62M 11/18

(54) **MEHRGANG-GETRIEBE FÜR FAHRRÄDER**
MULTISPEED BICYCLE GEAR SYSTEM
TRANSMISSION A PLUSIEURS VITESSES POUR BICYCLETTES

(30) Priorität: 16.05.1997 DE 19720796
(43) Veröffentlichungstag der Anmeldung: 19.05.1999
(73) Patentinhaber: ROHLOFF, Bernhard, 34125 Kassel (DE)
(72) Erfinder: ROHLOFF, Bernhard, 34125 Kassel (DE)
(74) Vertreter: Freiherr von Schorlemer, Reinfried, Dipl.-Phys.
(86) Internationale Anmeldenummer: DE9801367
(87) Internationale Veröffentlichungsnummer: WO98052818

(56) Entgegenhaltungen:
- EP-A- 0 383 350
- EP-A- 0 531 608
- DE-A- 4 142 867
- DE-A- 4 203 509
- DE-C- 4 342 347
- US-A- 5 540 456

## Beschreibung

Die Erfindung betrifft ein Mehrgang-Getriebe der im Oberbegriff des Anspruch 1 angegebenen Gattung.

Mehrgang-Getriebe für Fahrräder, insbesondere in Form von Mehrgang-Getriebenaben, sind in zahlreichen Ausführungsformen bekannt. Sie dienen wie Kettenschaltungen dem Zweck, mehrere wählbare Gangstufen bzw. Übersetzungen zur Verfügung zu stellen. Bisher können mit derartigen Getrieben bis zu zwölf Gangstufen realisiert werden. Ein Problem dabei besteht allerdings darin, daß die im Einzelfall gewünschte Abstufung zwischen den einzelnen Gangstufen allenfalls mit hohem konstruktivem Aufwand und nur für eine geringe Anzahl von Gangstufen optimal gestaltet werden kann. Nachteilig ist außerdem, daß die bekannten Getriebe aufgrund ungünstiger Zähnezahlverhältnisse und gleitgelagerter Planetenräder schlechte Wirkungsgrade aufweisen und zur Herstellung der den wählbaren Gangstufen entsprechenden Übersetzungen Zahnräder mit zahlreichen unterschiedlichen Zähnezahlen benötigt werden.

Bei einer bekannten Mehrgang-Getriebenabe dieser Art (DE 43 42 347 C1) wird das Schaltgetriebe durch insgesamt drei, nachfolgend kurz als Planetengetriebe bezeichnete Planetenradgetriebe gebildet. Dabei sind das erste und das zweite Planetengetriebe mit einem gemeinsamen, nachfolgend kurz als Planetenträger bezeichneten Planetenradträger bzw. Steg versehen, während das dritte Planetengetriebe als Differentialgetriebe ausgebildet ist, dessen Planetenträger mit dem Hohlrad des ersten Planetengetriebes verbunden ist.

Außerdem ist bei einer ersten Variante das Hohlrad des Differentialgetriebes mit der Nabenhülse verbunden, während das Sonnenrad des Differentialgetriebes mit dem Hohlrad des zweiten Planetengetriebes gekoppelt ist. Dagegen ist bei einer zweiten Variante umgekehrt das Sonnenrad des Differentialgetriebes mit der Nabenhülse verbunden und das Hohlrad des Differentialgetriebes mit dem Hohlrad des zweiten Planetengetriebes gekoppelt. Durch Kombination der vom ersten und zweiten Planetengetriebe bereitgestellten Übersetzungen sind insgesamt zwölf Gangstufen realisierbar. Allerdings ergibt sich ein schlechter Wirkungsgrad, da wegen der speziellen Art der Verkopplung ein hoher Blindleistungsfluß entsteht. Außerdem ergeben sich wegen des großen Durchmessers des Differentialgetriebes unerwünscht große und schwere Naben-Baugrößen.

Bei einem weiteren bekannten Mehrgang-Getriebe der eingangs bezeichneten Gattung (DE 41 42 867 A1) sind zwei hintereinander geschaltete Planetengetriebe mit einem gemeinsamen Planetenträger vorgesehen, wobei das erste Planetengetriebe ein Übersetzungsverhältnis von mehr als Eins, d.h. eine Untersetzung, und das zweite Planetengetriebe ein Übersetzungsverhältnis von weniger als Eins liefert. Dadurch, daß auf der Antriebsseite der Antreiber wahlweise mit dem Hohlrad oder dem Planetenträger des ersten Planetengetriebes und auf der Abtriebseite die Nabenhülse wahlweise mit dem Planetenträger oder dem Hohlrad des zweiten Planetengetriebes verbunden werden kann, lassen sich sieben oder neun Gangstufen realisieren. Allerdings muß hierbei jeweils die volle Antriebs- bzw. Abtriebskraft geschaltet werden, so daß entsprechend stabile und damit große und schwere Kupplungsteile erforderlich sind. Außerdem trägt die Anwendung von zwei schaltbaren Hohlrädern erheblich zur Baugröße und zum Gewicht der Nabenanordnung bei. Schließlich läßt sich dieses bekannte Schaltgetriebe schlecht unter Last schalten.

Ähnliche Nachteile ergeben sich bei Mehrgang-Getrieben, die zwar ebenfalls mehrere Sonnenräder und entsprechend abgestufte Planetenräder aufweisen, bei denen diese Sonnen- und Planetenräder jedoch jeweils zu einem einzigen Planetengetriebe zusammengefaßt sind (DE 42 03 509 A1, EP 0 383 350 A1).

Demgegenüber liegt der Erfindung die Aufgabe zugrunde, das Mehrgang-Getriebe der eingangs bezeichneten Gattung so auszubilden, daß bei Umschaltvorgängen im Antriebsweg nicht die volle Antriebs- oder Abtriebskraft geschaltet werden muß, geringere Baugrößen und Gewichte erzielt werden und dennoch im wesentlichen gleiche Sprünge zwischen aufeinander folgenden Gangstufen hergestellt werden können.

Zur Lösung dieser Aufgabe dienen die kennzeichnenden Merkmale des Anspruchs 1.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 einen Längsschnitt durch ein erfindungsgemäßes Mehrgang-Getriebe;
Fig. 2 bis 4 Querschnitte durch Planetengetriebe der Getriebenabe etwa längs der Linien II-II bis IV-IV der Fig. 1 in einem geringfügig vergrößerten Maßstab, wobei der klareren Darstellung wegen teilweise auf die Schraffur der Planeten- und Sonnenräder verzichtet wurde;
Fig. 5 und 6 jeweils Prinzipskizzen des Getriebes nach Fig. 1 in zwei unterschiedlichen Stellungen ihrer Schalteinrichtung;
Fig. 7 eine Seitenansicht einer Schaltkupplung des Mehrgang-Getriebes nach Fig. 1 in einem vergrößerten Maßstab;
Fig. 8 und 9 Schnitte längs der Linien VIII-VIII und IX-IX der Fig. 7; und
Fig. 10 eine den Fig. 5 und 6 entsprechende Prinzipskizze durch eine zweite Ausführungsform des erfindungsgemäßen Mehrgang-Getriebes.

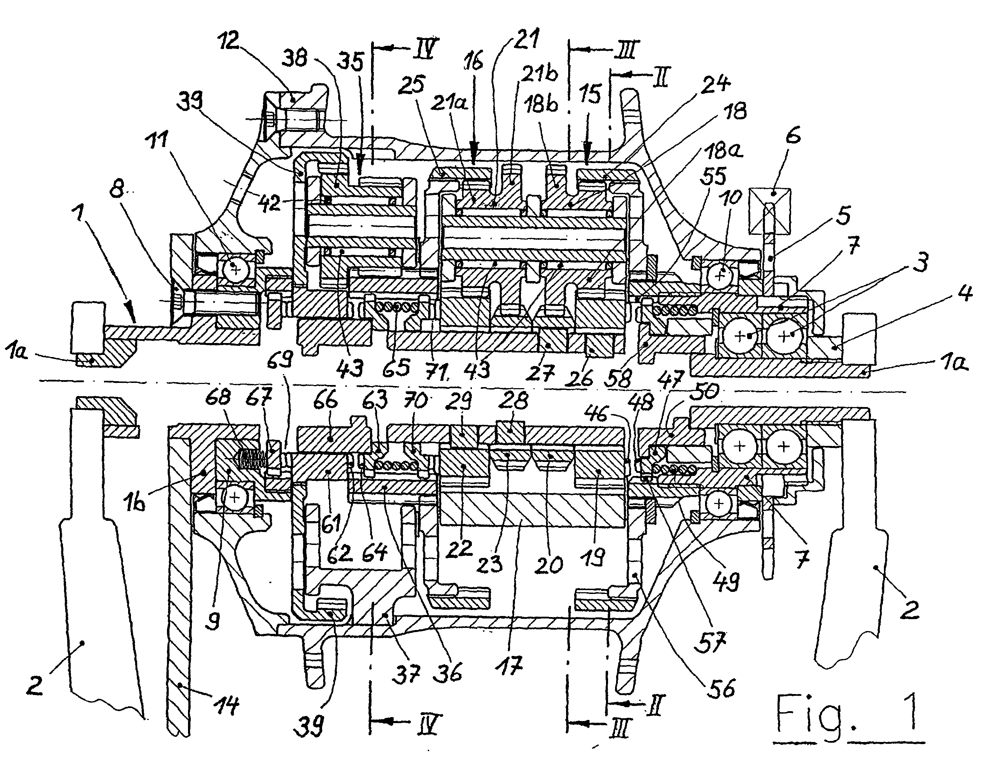

Eine speziell als Mehrgang-Getriebenabe für Fahrräder ausgebildetes Mehrgang-Getriebe enthält nach Fig. 1 eine hohl ausgebildete Nabenachse 1, deren zapfenartig ausgebildeten Enden 1a in entsprechenden Ausfallenden von nur schematisch dargestellten Rahmenteilen 2 liegen und die z.B. mit einem üblichen Schnellspanner, Muttern oder sonstwie drehfest in diesen montiert sind. Auf der Antriebsseite ist die Nabenachse 1 mit Kugellagern 3 versehen, die mit einem Spannring 4 axial auf ihr festgelegt sind. Mittels der Kugellager 3 ist ein fest mit einem Antriebsritzel 5 für eine Kette 6 od. dgl. verbundener Antreiber 7 drehbar auf der Nabenachse 1 gelagert. Auf der Abtriebsseite und in einem vorgewählten Abstand vom Spannring 4 weist die Nabenachse 1 einen radialen Flansch 1b auf, an dem mittels Schrauben 8 ein auf die Naben-achse 1 aufgezogener Lagerring 9 axial unverschieblich und drehfest befestigt ist. Auf dem Antreiber 7 und dem Lagerring 9 ist mittels Lagern 10 und 11 eine Nabenhülse 12 drehbar gelagert. Dabei liegen das Antriebsritzel 5, der Antreiber 7 und die Nabenhülse 12 koaxial zur Nabenachse 1. Außerdem kann eine drehfest mit dem Lagerring 9 und dem Flansch 1b verbundene und mit einem der Rahmenteile 2 zu verbindende Stütze 14 vorgesehen sein, die zur Abstützung der Differenz zwischen dem vom Antreiber 7 in die Getriebenabe eingeleiteten Drehmoment und dem über die Nabenhülse 12 an ein Hinterrad des Fahrrads weitergeleiteten Drehmoment dient, wobei das nicht dargestellte Hinterrad in üblicher Weise über Speichen od. dgl. mit der Nabenhülse 12 verbunden ist. Sofern die Getriebenabe mit einer nicht dargestellten Bremse versehen ist, übernimmt die Stütze 14 auch die Abstützung des Bremsmoments.

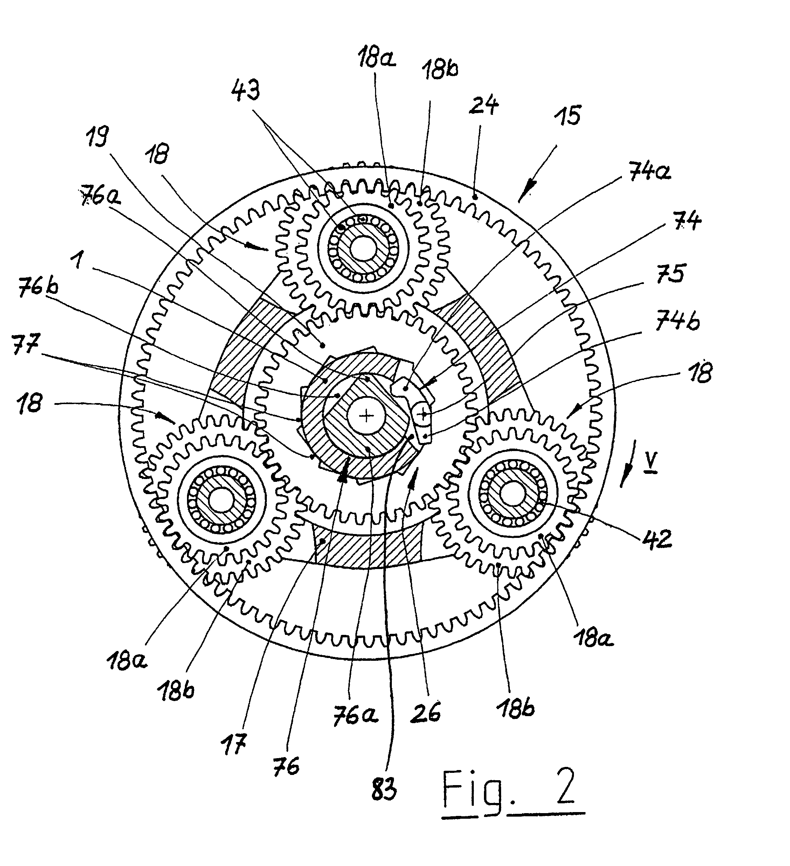

In der Nabenhülse 12 ist ein Schaltgetriebe gelagert, das zwei auf der Nabenachse 1 hintereinander angeordnete Planetengetriebe 15 und 16 enthält, die mit einem gemeinsamen, vorzugsweise einstückig hergestellten Planetenträger 17 versehen sind. Das erste, auf der Antriebsseite und in der Nähe des Antreibers 7 gelegene Planetengetriebe 15 enthält, wie insbesondere aus Fig. 2, 3, 5 und 6 ersichtlich ist, einen Planetenträgerabschnitt mit wenigstens einem ersten Planetenrad 18, das wenigstens zwei Stufen 18a,18b mit unterschiedlichen Durchmessern aufweist, wobei die Stufe 18a einen kleineren Durchmesser aufweist und mit einem ersten Sonnenrad 19 von vergleichsweise großem Durchmesser kämmt, während die den größeren Durchmesser aufweisende Stufe 18b mit einem zweiten Sonnenrad 20 im Eingriff ist, das einen entsprechend kleineren Durchmesser besitzt. Das vom Antreiber 7 axial weiter entfernt liegende zweite Planetengetriebe 16 enthält einen Planetenträgerabschnitt mit wenigstens einem zweiten Planetenrad 21, das ebenfalls wenigstens zwei Stufen 21a,21b mit unterschiedlichen Durchmessern aufweist, wobei die Stufe 21a mit dem kleineren Durchmesser mit einem dritten Sonnenrad 22 von vergleichsweise großem Durchmesser und die den größeren Durchmesser aufweisende Stufe 21b mit einem vierten Sonnenrad 23 im Eingriff ist, das einen entsprechend kleineren Durchmesser besitzt. Dabei versteht sich, daß die beschriebenen Planeten- und Sonnenräder sowie Planetenträger in üblicher Weise um die Nabenachse 1 umlaufen können.

Schließlich weisen die Planetengetriebe 15,16 je ein zur Nabenachse 1 koaxiales erstes bzw. zweites Hohlrad 24 bzw. 25 auf, wobei das Hohlrad 24 mit der Stufe 18a und das Hohlrad 25 mit der Stufe 21a des ersten bzw. zweiten Planetenrads 18 bzw. 21 im Eingriff ist.

Zur Bereitstellung und Auswahl von mehreren Übersetzungsverhältnissen zwischen dem Antreiber 7 und der Nabenhülse 12 ist außerdem eine Schalteinrichtung vorgesehen, die in Fig. 2 bis 6 schematisch angedeutete Mittel 26, 27, 28 und 29, vorzugsweise in Form von Schaltkupplungen aufweist, mittels derer die Sonnenräder 19, 20, 22 und 23 wahlweise mit der Nabenachse 1 verbunden werden können. Die Schaltkupplungen 26 bis 29 sind z.B. als Klinkenfreiläufe ausgebildet, die mit üblichen Schalthebeln od. dgl. von außerhalb der Getriebenabe her steuerbar sind.

Für Fahrräder bestimmte Mehrgang-Getriebenaben dieser Art sind dem Fachmann allgemein bekannt und brauchen daher nicht näher erläutert werden. Zur Vermeidung von Wiederholungen wird insoweit z.B. auf die Druckschriften DE 41 42 687 A1 und DE 43 42 347 C1 verwiesen.

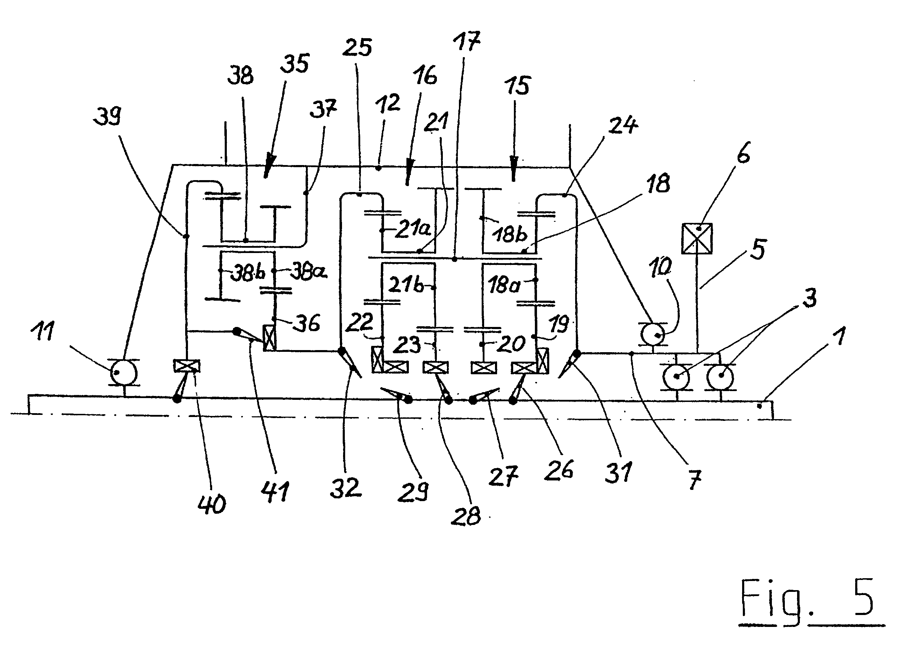

Nach einem besonderen Merkmal der Erfindung wird das Planetengetriebe 15 an dessen Hohlrad 24 angetrieben, das zu diesem Zweck drehfest und axial unverschiebbar mit dem Antreiber 7 verbunden ist. Außerdem sind bei einer bevorzugten Ausführungsform der Erfindung beide Planetengetriebe 15,16 spiegelbildlich zu einer gedachten, zwischen ihnen verlaufenden und senkrecht zur Nabenachse 1 liegenden Symmetrieebene aufgebaut und angeordnet, wobei z.B. die beiden den größeren Durchmesser aufweisenden Planetenradstufen 18b,21b einander unmittelbar zugewandt sind (Fig. 1 und 5), während die beiden den kleineren Durchmesser aufweisenden Planetenradstufen 18a,21a größere Abstände von der gedachten Symmetrieebene besitzen. Dabei weisen die Stufen 18b,21b vorzugsweise identische Durchmesser und Zähnezahlen auf, und dasselbe gilt für die Durchmesser und Zähnezahlen der Stufen 18a,21a. Durch diesen spiegelsymmetrischen Aufbau können die Kosten für die Herstellung und Lagerhaltung erheblich reduziert werden. Entsprechend können auch die Sonnenräder 20,23 bzw. 19,22 und die Hohlräder 24,25 paarweise identisch ausgebildet werden. Daher sind insgesamt nur fünf Zähnezahlen an vier unterschiedlichen Bauteilen 18, 19, 20 und 24 festzulegen, da die Bauteile 21, 22, 23 und 25 den Bauteilen 18, 19, 20 und 24 identisch entsprechen.

Wird das beschriebene Schaltgetriebe nur als Siebengang-Getriebe verwendet, dient zum Abtrieb das zweite Hohlrad 25 des Planetengetriebes 16, das in diesem Fall abweichend von Fig. 1 und 5,6 direkt fest mit der Nabenhülse 12 verbunden sein könnte. Ist dabei zusätzlich ein Freilauf für die Nabenhülse 12 erwünscht, könnte das Hohlrad 25 z.B. mit einem Klinkenradträger verbunden werden, der Freilaufklinken trägt, die mit einer entsprechenden Verzahnung in der Nabenhülse 12 derart zusammenwirken, daß eine Drehmomentübertragung nur in einer Richtung erfolgen kann.

Zur Herstellung verschiedener Gangstufen dienen bei einer derartigen Variante zunächst die vier Schaltkupplungen 26 bis 29. Da hierbei der Antreiber 7 mit dem ersten Hohlrad 24 und das zweite Hohlrad 25 mit der Nabenhülse 12 fest verbunden ist, werden z.B. mit den Schaltkupplungen 26 und 28 das erste und das dritte Sonnenrad 19,23 mit der Nabenachse 1 verbunden (Fig. 5), während die Sonnenräder 20,22 frei rotieren können. Dadurch legt das erste Planetengetriebe 15 eine Drehzahl für den Planetenträger 17 fest, der seinerseits das Planetenrad 21 antreibt. Dieses wälzt sich auf dem feststehenden dritten Sonnenrad 23 ab, das dadurch eine Drehzahl für das zweite Hohlrad 25 und damit die Nabenhülse 12 festlegt. Eine weitere Gesamtübersetzung ist dadurch herstellbar, daß die Schaltkupplungen 27,29 ein- und die Schaltkupplungen 26,28 ausgeschaltet werden, so daß jetzt die mit der Nabenachse 1 verbundenen Sonnenräder 20,22 das Gesamtübersetzungsverhältnis festlegen. Weitere Übersetzungsverhältnisse könnten dadurch erhalten werden, daß die Sonnenräder 19,22 bzw. 20,23 mit der Nabenachse 1 verbunden werden. Bei spiegelsymmetrischem Aufbau der beiden Planetengetriebe 15,16 führt das allerdings jeweils zu einem Gesamtübersetzungsverhältnis von 1 : 1, d.h. zu einer direkten Gangstufe.

Für die spezielle Ausgestaltung der Schaltkupplungen 26 bis 29 gibt es zahlreiche Möglichkeiten. Schaltkupplungen der hier interessierenden Art sind allerdings vorzugsweise mit schaltbaren Klinken od. dgl. und mit Freiläufen versehen, so daß die betreffenden Sonnenräder 19, 20, 22 und 23 nur in einer Drehrichtung stillgesetzt werden, in der entgegengesetzten Drehrichtung dagegen drehen können. Hierdurch ergibt sich der Vorteil, daß die Schaltkupplungen auch unter Last leicht geschaltet werden können, indem beim Einlegen eines neuen Gangs z.B. das bisher aktive Sonnenrad noch kurzzeitig eingeschaltet bleibt und daher keine Unterbrechung des Kraftflusses eintritt. Ist der neue Gang ein schnellerer Gang, dann ist dieser sofort wirksam, da das bisher wirksame Sonnenrad über den Freilauf weiterlaufen kann, solange es noch eingeschaltet ist. Ist der neue Gang dagegen ein langsamerer Gang, dann bleibt das bisher wirksame Sonnenrad auch weiterhin aktiv, bis es ausgeschaltet wird, da in diesem Fall das neu gewählte Sonnenrad über den Freilauf überholen kann. Schaltkupplungen dieser Art sind allgemein bekannt (DE 41 42 867 A1) und brauchen daher nicht näher erläutert werden. Alternativ wäre es natürlich auch möglich, starre Klauenkupplungen od. dgl. zu verwenden, in welchem Fall zwischen dem Ausrücken des alten Gangs und Einrücken des neuen Gangs jeweils ein kurzzeitiges Leerlaufen bzw. Unterbrechen des Kraftflusses vorgesehen werden müßte. Eine bevorzugte Ausführungsform ist weiter unten erläutert.

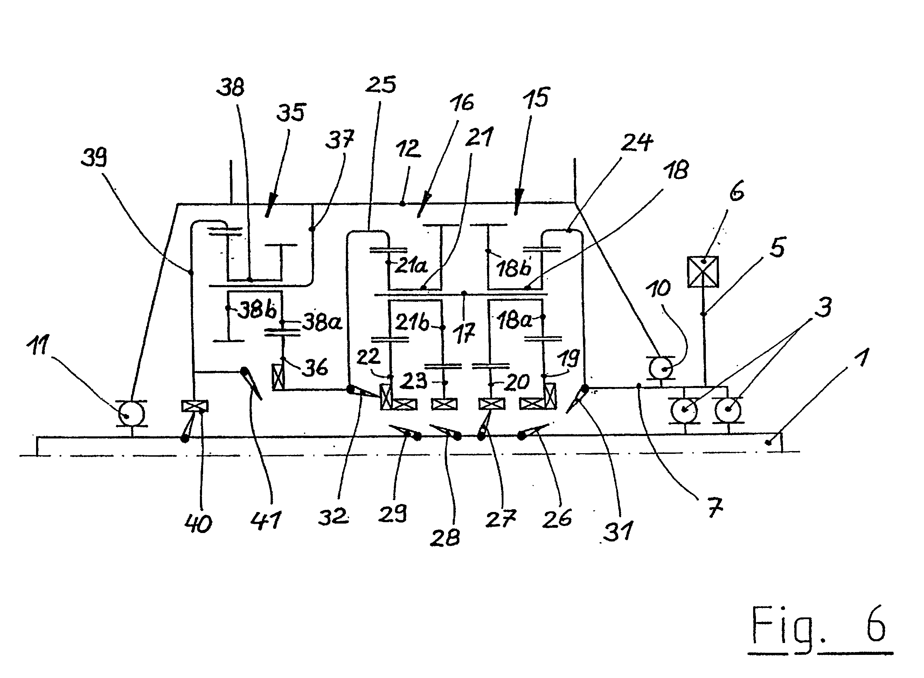

Zur Vergrößerung der Zahl der Gangstufen trotz Anwendung des gemeinsamen Planetenträgers 17 weist die Schalteinrichtung nach einem weiteren, besonders wesentlichen Merkmal der Erfindung zwei weitere Schaltkupplungen 31 und 32 (Fig. 5,6) auf, von denen die Schaltkupplung 31 zur wahlweisen Verbindung des ersten Hohlrads 24 mit dem ersten Sonnenrad 19 dient, während mit der zweiten Schaltkupplung 32 das zweite Hohlrad 25 wahlweise mit dem vierten Sonnenrad 22 kuppelbar ist. Dadurch wird bei eingeschalteter Schaltkupplung 31 das erste Planetengetriebe 15 und bei eingeschalteter Schaltkupplung 32 das zweite Planetengetriebe 16 blockiert, d.h. der Planetenträger 17 dreht bei eingeschalteter Schaltkupplung 31 stets mit der Drehzahl des Antreibers 7, während bei eingeschalteter Schaltkupplung 32 das zweite Hohlrad 25 stets mit der Drehzahl des gemeinsamen Planetenträgers 17 umläuft. Die beiden Schaltkupplungen 31,32 werden vorzugsweise wie die oben erläuterten Schaltkupplungen 26 bis 29 ausgebildet. Eine alternative Ausführungsform ist weiter unten erläutert.

Mit den Schaltkupplungen 31,32 lassen sich bei spiegelsymmetrischem Aufbau der Planetengetriebe 15,16 zusätzlich zu den beiden oben beschriebenen Gangstufen weitere Gangstufen wie folgt einstellen: Ist die Schaltkupplung 31 ein- und die Schaltkupplung 32 ausgeschaltet, dann kann mit den Schaltkupplungen 28,29 wahlweise das Sonnenrad 23 oder das Sonnenrad 22 mit der Nabenachse 1 verbunden und das jeweils andere Sonnenrad freigegeben werden, was zwei vom zweiten Planetengetriebe 16 bestimmte Übersetzungsverhältnisse zwischen dem Planetenträger 17 und der Nabenhülse 12 liefert, weil das Übersetzungsverhältnis des ersten Planetengetriebes 1 : 1 beträgt. Ist dagegen die Schaltkupplung 32 ein- und die Schaltkupplung 31 ausgeschaltet (Fig. 6), dann liegt das Übersetzungsverhältnis des zweiten Planetengetriebes 16 mit 1 : 1 fest, während zwei durch das erste Planetengetriebe 15 festgelegte Übersetzungsverhältnisse zwischen dem Antreiber 7 und dem Planetenträger 17 dadurch eingestellt werden können, daß mittels der Schaltkupplungen 26,27 wahlweise eines der Sonnenräder 19,20 mit der Nabenachse 1 verbunden wird. Schließlich läßt sich durch Einschalten beider Schaltkupplungen 31,32 auch auf diese Weise ein Übersetzungsverhältnis von 1 : 1 zwischen dem Antreiber 7 und der Nabenhülse 12 herstellen. Insgesamt ist die beschriebene Mehrgangnabe daher eine Siebengang-Getriebenabe.

Ein besonderes Kennzeichen der Schaltkupplungen 31,32 besteht darin, daß mit ihnen die Sonnenräder 19,22 zusätzlich zum zugehörigen Hohlrad 24 bzw. 25 und nicht anstelle von diesem mit dem Antreiber 7 bzw. der Nabenhülse 12 verbunden werden. Dadurch wird bei Betätigung der Schaltkupplungen 31,32 immer nur ein Teil der vom Antreiber 7 kommenden bzw. auf die Nabenhülse 12 ausgeübten An- oder Abtriebskraft umgeschaltet, und die Umschaltung dient allein dem Zweck, das jeweilige Planetengetriebe zu blockieren oder die Blockierung aufzuheben. Wegen der speziellen Konfiguration des beschriebenen Schaltgetriebes kann erreicht werden, daß z.B. nur ca. 50 % der Gesamtkraft zu schalten sind. Dagegen werden beim Stand der Technik in der Regel 100 % der An- oder Abtriebskraft zwischen einem Hohlrad und einem zugehörigen Planetenträger oder umgekehrt geschaltet, um dadurch einen zweiten Kraftübertragungsweg zu schaffen. Das erfindungsgemäße Schaltgetriebe bringt daher die Vorteile mit sich, daß weitaus geringere Kräfte auf die Schaltkupplungen ausgeübt werden müssen und die Schaltelemente daher kleiner und leichter ausgelegt werden können bzw. daß bei gleichen Kupplungskräften wesentlich höhere Antriebs- bzw. Abtriebskräfte insgesamt übertragbar sind. Das wirkt sich auch positiv auf die Kräfte aus, die beim Schalten unter Last zur Betätigung der Schaltkupplungen 31,32 aufzuwenden sind.

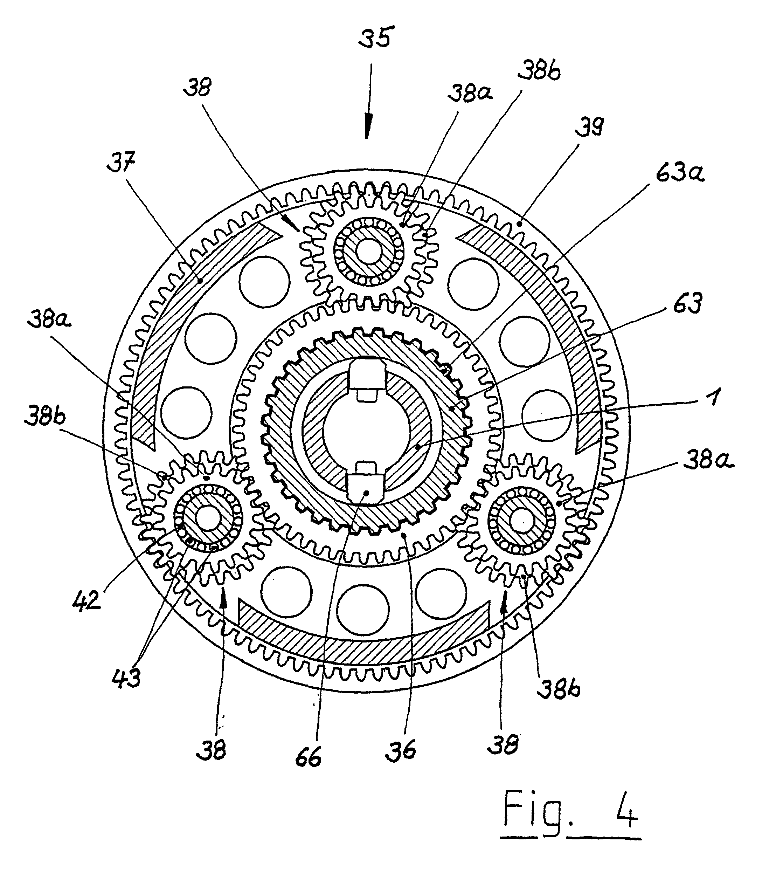

Das beschriebene Siebengang-Schaltgetriebe kann durch einen einfachen Nachschaltsatz in ein Vierzehngang-Schaltgetriebe umgewandelt werden. Hierzu ist gemäß Fig. 1 und 5,6 ein drittes Planetengetriebe 35 mit einem fünften Sonnenrad 36, einem zweiten Planetenträger 37 mit wenigstens einem dritten Planetenrad 38 und einem zweiten Hohlrad 39 vorgesehen. Das Planetenrad 38 weist zwei Stufen 38a,38b (Fig. 4 bis 6) mit unterschiedlichen Durchmessern auf. Die Stufe 38a mit dem kleineren Durchmesser ist mit dem fünften Sonnenrad 36, die Stufe 38b mit dem größeren Durchmesser dagegen mit dem zweiten Hohlrad 39 im Eingriff, das außerdem gegen Rückwärtsdrehungen durch einen an der Nabenachse 1 abgestützten Freilauf 40 (Fig. 5) gesichert ist. Außerdem ist das fünfte Sonnenrad 36 fest mit dem zweiten Hohlrad 25 verbunden und mit diesem z.B. einstückig hergestellt (Fig. 1). Schließlich ist für diesen Fall der dritte Planetenträger 37 fest mit der Nabenhülse 12 verbunden, während das zweite Hohlrad 25 mit dem fünften Sonnenrad 36 über eine weitere, vorzugsweise einen Freilauf aufweisende Schaltkupplung 41 gemeinsam wahlweise mit dem dritten Hohlrad 39 verbunden oder von diesem entkoppelt werden können. Ist die Schaltkupplung 41 entsprechend Fig. 5 eingerückt, dann dreht sich der dritte Planetenträger 37 mit der Drehzahl des zweiten Hohlrads 25, d.h. das dritte Planetengetriebe 35 ist mit einem Übersetzungsverhältnis von 1 : 1 blockiert, so daß es ohne Wirkung ist und sich die oben erläuterten Gangstufen realisieren lassen. Ist die Schaltkupplung 41 dagegen entsprechend Fig. 6 ausgerückt, dann wird die Abtriebsdrehzahl des zweiten Hohlrads 25 über das fünfte Sonnenrad 36 auf dem dritten Planetenträger 37 übertragen, da das Hohlrad 39 über den Freilauf 40 an der Nabenachse 1 drehfest abgestützt ist und daher die vom Sonnenrad 36 angetriebenen Planetenräder 38 den Planetenträger 37 mitnehmen. Dabei wirkt das dritte Planetengetriebe 35 z.B. als Untersetzungsgetriebe mit einem Übersetzungsverhältnis von weniger als 2 : 1, damit die sieben oben beschriebenen Gangstufen wahlweise bei direkter Übersetzung 1 : 1 oder bei nachgeschalteter Untersetzung wirksam gemacht werden können. Außerdem ergibt sich auch im Hinblick auf die Schaltkupplung 41 der oben in Verbindung mit den Schaltkupplungen 31,32 beschriebene Vorteil, daß mit ihr immer nur ein Teil der vom zweiten Hohlrad 25 gelieferten Antriebskraft geschaltet werden muß.

Das beschriebene Schaltgetriebe wird z.B. mit den aus der Tabelle 1 ersichtlichen Zähnezahlen betrieben:

**Tabelle 1**

| RAD | Zähnezahl |
|---|---|
| Sonne 19 | 42 |
| Sonne 20 | 35 |
| Sonne 22 | 42 |
| Sonne 23 | 35 |
| Sonne 36 | 51 |
| Planet 18 | |
| Stufe 18 a | 24 |
| Stufe 18 b | 32 |
| Planet 21 | |
| Stufe 21 a | 24 |
| Stufe 21 b | 32 |
| Planet 38 | |
| Stufe 38 a | 20 |
| Stufe 38 b | 26 |
| Hohlrad 24 | -90 |
| Hohlrad 25 | -90 |
| Hohlrad 39 | -96 |

Die beschriebenen Zähnezahlen haben zur Folge, daß das erste Planetengetriebe 15 mit einem Übersetzungsverhältnis zwischen dem Antreiber 7 und dem Planetenträger 17 von ca. 1,467 : 1 bei eingeschalteter Schaltkupplung 26 und von ca. 1,292 : 1 bei eingeschalteter Schaltkupplung 27 arbeitet. Dagegen beträgt das Übersetzungsverhältnis zwischen dem Planetenträger 17 und dem zweiten Hohlrad 25 umgekehrt ca. 1 : 1,292, wenn die Schaltkupplung 28 eingeschaltet ist, bzw. ca. 1 : 1,467, wenn die Schaltkupplung 29 eingeschaltet ist. Dadurch arbeitet das Planetengetriebe 15 stets als Untersetzungsgetriebe, das Planetengetriebe 16 dagegen stets als Übersetzungsgetriebe. Schließlich beträgt das Übersetzungsverhältnis des Nachschaltsatzes im Ausführungsbeispiel ca. 2,448 : 1, so daß sich insgesamt eine Untersetzung ergibt, wenn die Schaltkupplung 41 ausgeschaltet ist, und 1 : 1, wenn die Schaltkupplung 41 eingeschaltet ist.

Bei der beschriebenen Anordnung lassen sich mit den in Tabelle 1 angegebenen Zähnezahlen die in Tabelle 2 angegebenen Gangstufen realisieren. Dabei ist mit dem Buchstaben "x" unter den vorhandenen Schaltkupplungen jeweils angegeben, welche Schaltkupplung sich bei der jeweiligen Schaltstufe im eingeschalteten Zustand befindet, wohingegen ein Fehlen des Buchstabens "x" andeutet, daß die jeweilige Schaltkupplung ausgeschaltet ist. Als "Übersetzungsverhältnis" ist dabei wie in der vorliegenden Beschreibung das Verhältnis der Antriebsdrehzahl zur Abtriebsdrehzahl definiert.

**Tabelle 2**

| Gangstufe | Schaltkupplung | | | | | | | Übersetzung | Stufensprung |
|---|---|---|---|---|---|---|---|---|---|
| | 26 | 27 | 28 | 29 | 31 | 32 | 41 | | |
| 1. Gang | X | | | | | X | | 3,591 | 13,5 % |
| 2. Gang | | X | | | | X | | 3,163 | 13,8 % |
| 3. Gang | X | | X | | | | | 2,779 | 13,5 % |
| 4. Gang | | | | | X | X | | 2,448 | 13,5 % |
| 5. Gang | | X | | X | | | | 2,157 | 13,8 % |
| 6. Gang | | | X | | X | | | 1,895 | 13,5 % |
| 7. Gang | | | | X | X | | | 1,670 | 13,8 % |
| 8. Gang | X | | | | | X | X | 1,467 | 13,5 % |
| 9. Gang | | X | | | | X | X | 1,292 | 13,8 % |
| 10. Gang | X | | X | | | | X | 1,135 | 13,5 % |
| 11. Gang | | | | | X | X | X | 1,000 | 13,5 % |
| 12. Gang | | X | | X | | | X | 0,881 | 13,8 % |
| 13. Gang | | | X | | X | | X | 0,774 | 13,5 % |
| 14. Gang | | | | X | X | | X | 0,682 | - |

Daraus folgt, daß vergleichsweise konstante Stufensprünge zwischen ca. 13,5 % und 13,8 % erhalten werden, wenn als Stufensprung das Verhältnis der Übersetzung einer Gangstufe zur Übersetzung der jeweils schnelleren Gangstufe bezeichnet wird und der in der Tabelle für irgendeinen Gang angegebene Stufensprung den Übergang von diesem Gang zum jeweils nächsten Gang angibt.

Weiter ist es mit dem beschriebenen Schaltgetriebe möglich, die Gesamtübersetzung, d.h. das Verhältnis der größten Übersetzung zur kleinsten Übersetzung zu variieren. Im Ausführungsbeispiel beträgt die Gesamtübersetzung ca. 526 %, so daß ein sehr breiter Bereich von Übersetzungsverhältnissen abgedeckt ist.

Ein weiterer wesentlicher Vorteil des beschriebenen Getriebes besteht darin, daß die Zähnezahlen der verschiedenen Stufen der Planetenräder mit 20, 24, 26 und 32 vergleichsweise groß bemessen werden können. Hierdurch ist es möglich, die Planetenräder 18, 21 und 38 mit Hilfe von in Fig. 1 bis 4 angedeuteten Wälzlagern, insbesondere Nadellagern, drehbar in den Planetenträgern 17 und 37 zu lagern, wobei jedes Wälzlager aus einem zwischen zwei scheibenförmigen Planetenträgerteilen geführten Lagerkäfig 42 und einer Mehrzahl von in diesem angeordneten Lagernadeln 43 besteht, deren Achsen parallel zu den Drehachsen der Planetenräder 18, 21 und 38 angeordnet sind. Dadurch lassen sich die Reibungsverluste klein halten, was für den Gesamtwirkungsgrad günstig ist. Günstig für den Wirkungsgrad ist schließlich auch die vergleichsweise geringe Differenz zwischen den Zähnezahlen der jeweils im Eingriff befindlichen Sonnen- und Planetenräder.

Ein bevorzugtes Ausführungsbeispiel für die Schaltkupplung 31 ist in Fig. 1 und 7 bis 9 gezeigt. Das Sonnenrad 19 ist danach auf seiner dem Antreiber 7 zugewandten Stirnseite mit einer Sägezahn-Verzahnung 46 versehen und steht mit dieser einem koaxial zur Nabenachse 1 angeordneten Kupplungsring 47 gegenüber, der an seiner dem Sonnenrad 19 zugewandten Stirnseite eine entsprechende, in die Verzahnung 46 passende Sägezahn-Verzahnung 48 aufweist. Der Kupplungsring 47 steht unter der Vorspannung einer zur Nabenachse 1 koaxialen, als Schraubenfeder ausgebildeten Druckfeder 49, deren eines Ende am Antreiber 7 (Fig. 1) und deren anderes Ende am Kupplungsring 47 abgestützt ist und diesen in Richtung des Sonnenrads 19 zu verschieben sucht. Zur Steuerung des Kupplungsvorgangs ist z.B. wenigstens ein Schaltschieber 50 vorgesehen, der in einem achsparallelen Führungsschlitz der Nabenachse 1 in Richtung eines Pfeils w verschiebbar gelagert und mit einem Sperrzahn 51 versehen ist, mit dem er z.B. an der die Verzahnung 48 aufweisenden Stirnseite des Kupplungsrings 47 anliegt. Der Schaltschieber 50 weist außerdem einen radial nach innen ragenden Schaltzapfen 52 auf, der z.B. von einer nicht näher dargestellten Schaltwalze mit Führungsnuten gesteuert wird oder an einem Mitnehmerzapfen 53 anliegt, der an einer nicht näher dargestellten, in der Nabenachse 1 verschiebbar gelagerten Schaltstange 54 angebracht ist. Dabei ist die Anordnung so getroffen, daß der Kupplungsring 47 bei der aus Fig. 8 ersichtlichen Stellung der Schaltstange 54 gegen den Druck der Druckfeder 49 in einem solchen axialen Abstand vom Sonnenrad 19 gehalten wird, daß die beiden Verzahnungen 46,48 nicht im Eingriff sind. Wird die Schaltstange 54 dagegen axial weiter in der Nabenachse 1 vorgeschoben, d.h. in Fig. 8 nach links bewegt, dann drückt die Druckfeder 49 den Kupplungsring 47 allmählich in Richtung des Sonnenrads 19 vor, bis die beiden Verzahnungen 46,48 in Eingriff gelangen. Dabei sind die schrägen Kanten der Sägezahn-Verzahnungen 46,48 in Drehrichtung so ausgerichtet, daß bei in Eingriff befindlichen Zähnen das Sonnenrad 19 vom Antreiber 7 über den Kupplungsring 47 in Antriebsrichtung mitgedreht werden kann. Wird der Antreiber 7 dagegen in der entgegengesetzten Richtung gedreht, können die Verzahnungen 46,48 im Sinne eines Freilaufs aneinander gleiten, da der Kupplungsring 47 wegen der Druckfeder 49 axial nachgiebig gelagert ist. Dieselbe Freilaufwirkung ergibt sich, wenn das Sonnenrad 19 schneller als der Antreiber 7 dreht und diesen dabei überholt. Zur Entkupplung ist es lediglich erforderlich, die Schaltstange 54 wieder zurückzuziehen, wodurch über den Mitnehmerzapfen 53, den Schaltzapfen 52 und den Sperrzahn 51 auch der Schaltschieber 50 zurückgezogen wird, bis er wieder die Position nach Fig. 1 und 7 bis 9 einnimmt.

Die Lagerung des Kupplungsrings 47 erfolgt zweckmäßig mit Hilfe eines koaxial zur Nabenachse 1 angeordneten, fest mit dem Antreiber 7 verbundenen Verbindungsrohrs 55 (Fig. 1), an dem auch eine Stirnwand 56 des ersten Hohlrads 24 befestigt ist. Das Verbindungsrohr 55 weist in seinem Innenmantel achsparallel verlaufende Mitnehmernuten auf, die am Außenmantel des Kupplungsrings 47 angebrachte Mitnehmerzähne 57 (Fig. 1,8,9) formschlüssig aufnehmen. Dadurch ist der Kupplungsring 47 einerseits nach Art einer Nut/Feder-Verbindung axial verschiebbar, andererseits jedoch so im Verbindungsrohr 55 gelagert, daß er jede vom Antreiber 7 auf das Verbindungsrohr 55 ausgeübte Drehbewegung im wesentlichen spielfrei mitmacht.

Um sicherzustellen, daß der Kupplungsring 47 gleichmäßig axial verschoben wird und dabei nicht verkantet, ist vorzugsweise an einer in Umfangsrichtung um 180° versetzten Stelle der Nabenachse 1 ein zweiter, dem Schaltschieber 50 entsprechender und wie dieser gesteuerter Schaltschieber 58 (Fig. 8) angeordnet.

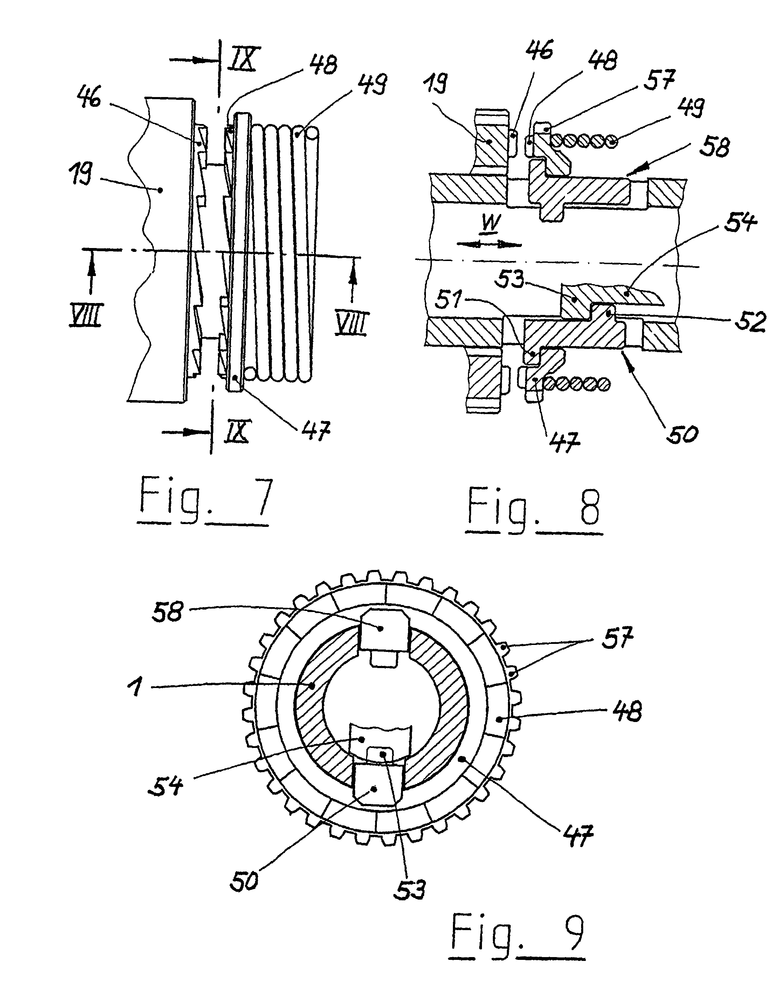

Die Schaltkupplung 41 (Fig. 5, 6 und 7) ist analog zu der Schaltkupplung 31 nach Fig. 7 bis 9 aufgebaut. Hier weist das Hohlrad 39 eine Nabe 61 (Fig. 1) mit einer Stirnverzahnung 62 auf, die einem dem Kupplungsring 47 nach Fig. 7 bis 9 entsprechenden, auch in Fig. 4 sichtbaren Kupplungsring 63 gegenübersteht, der mit einer entsprechenden Sägezahn-Verzahnung 64 versehen ist und unter der Wirkung einer Druckfeder 65 steht. Der Kupplungsring 63 ist in diesem Fall mit Hilfe von Nut/Feder-Verbindungen 63a (Fig. 4) im fünften Sonnenrad 36 axial verschiebbar, jedoch relativ zu diesem undrehbar gelagert. Zur axialen Verschiebung des Kupplungsrings 63 dienen einerseits die Druckfeder 65, andererseits wenigstens ein den Schaltschiebern 50,58 nach Fig. 7 bis 9 entsprechender Schaltschieber 66 und eine der Schaltstange 54 entsprechende, in Fig. 1 nicht dargestellte Schaltstange. Im eingekuppelten Zustand nimmt daher das Sonnenrad 36 das Hohlrad 39 in Antiebsrichtung mit, während eine entgegengesetzte Drehbewegung des Sonnenrads 36 und eine Überholbewegung des Hohlrads 39 wegen der anhand der Fig. 7 bis 9 beschriebenen Freilaufwirkung ohne weiteres möglich sind. Wird der Kupplungsring 63 dagegen vom Hohlrad 39 entkuppelt, dann treibt dieses in der oben beschriebenen Weise den Planetenträger 37 an, wobei sich das Hohlrad 39 über den Freilauf 40 (Fig. 5,6) an der Nabenachse 1 abstützt. Dabei ist der Freilauf 40 in Fig. 1 beispielsweise als Kupplungsring 67 dargestellt, der analog zu Fig. 7 bis 9 axial verschiebbar, jedoch relativ undrehbar im Lagerring 9 gelagert und durch mindestens eine an diesem abgestützte Druckfeder 68 in Richtung der Nabe 61 vorgespannt ist. Die einander zugewandten Stirnseiten der Nabe 61 und des Kupplungsrings 67 weisen zusammenwirkende Sägezahn-Verzahnungen 69 ent- sprechend Fig. 7 bis 9 auf, wobei die Ausbildung der Zähne so gewählt ist, daß sich entweder die beschriebene Freilaufwirkung ergibt oder eine Rückdrehung des Hohlrads 39 vermieden wird.

Schließlich könnte die Schaltkupplung 32 (Fig. 5,6) ebenfalls analog zu Fig. 7 bis 9 ausgebildet sein. Alternativ ist es aber auch möglich, gemäß Fig. 1 einen Kupplungsring 70 vorzusehen, der mit einer Stirnseite an dem vom Kupplungsring 63 abgewandten Ende der Druckfeder 65 abgestützt ist, mit seiner anderen Stirnseite dagegen dem Sonnenrad 22 zugewandt und im übrigen wie der Kupplungsring 63 im fünften Sonnenrad 36 verschiebbar und relativ undrehbar zu diesem gelagert ist. Die einander zugewandten Stirnseiten des Sonnenrads 22 und des Kupplungsrings 70 sind mit derart gerichteten Sägezahn-Verzahnungen 71 versehen, daß das Sonnenrad 22 bzw. das Hohlrad 25 den Kupplungsring 70 und damit auch das Sonnenrad 36 in Antriebsrichtung mitnehmen kann. Da dies immer dann erforderlich ist, wenn das Sonnenrad 22 schneller als das Hohlrad 25 bzw. das fünfte Sonnenrad 36 drehen will, d.h. wenn keine der beiden Schaltkupplungen 28,29 eingeschaltet ist, braucht für den Kupplungsring 70 kein gesonderter Schaltschieber vorgesehen werden. Versucht nämlich das Sonnenrad 22 schneller als das Sonnenrad 36 zu drehen, dann nimmt es dieses unter der Wirkung der Druckfeder 65 und des Kupplungsrings 70 automatisch mit. Dreht das Sonnenrad 22 dagegen langsamer oder gar nicht, weil es selbst oder das Sonnenrad 23 mit der Nabenachse 1 gekoppelt ist, dann ergibt sich die mehrfach erläuterte Freilaufwirkung.

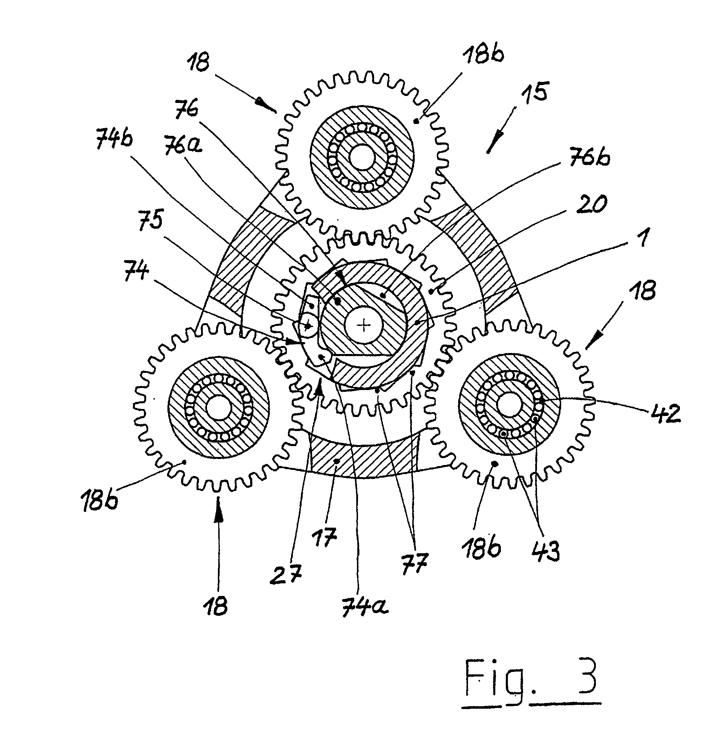

Ein Ausführungsbeispiel für die Schaltkupplungen 26 bis 29 ist schematisch in Fig. 1 bis 3 anhand der Schaltkupplungen 26 und 27 dargestellt. Danach ist im Mantel der hohlen Nabenachse 1 ein Steuerhebel 74 schwenkbar gelagert, der um einen parallel zur Nabenachse 1 verlaufenden Schwenkzapfen 75 drehbar ist. Der Steuerhebel 74 besteht aus einem zweiarmigen Hebel, dessen in die Nabenachse 1 ragender Hebelarm 74a mit einer in der Nabenachse 1 drehbar gelagerten Nockenwelle 76 zusammenwirkt, die in Umfangsrichtung wenigstens je einen Nocken 76a und ein Nockental 76b aufweist. Außerdem ist das Sonnenrad 19 bzw. 20 an seinem Innenumfang mit einer derart ausgebildeten Verzahnung 77 versehen, daß der als Schaltklinke ausgebildete Hebelarm 74b des Steuerhebels 74 in diese einfallen kann, wie Fig. 2 zeigt. Dabei ist die Anordnung so getroffen, daß der Steuerhebel 74 beim Auflaufen des Hebelarms 74a auf einen Nocken 76a der Nockenwelle 76 so verschwenkt wird, daß sein in die Verzahnung 77 eingerasteter Hebelarm 74b (Fig. 3) aus dieser herausgeschwenkt und dadurch das Sonnenrad 19 bzw. 20 freigegeben wird, wohingegen der Hebelarm 74b beim Einlaufen des Hebelarms 74a in ein Nockental 76b (Fig. 2) von einer nicht dargestellten Feder wieder mit der Sonnenrad-Verzahnung 77 in Eingriff gebracht und dadurch das Sonnenrad 19 bzw. 20 entgegengesetzt zu der durch den Pfeil v dargestellte Antriebsrichtung des Planetenträgers 17 stillgesetzt wird, wie z.B. Fig. 2 zeigt. In entgegengesetzte Richtung ist das Sonnenrad 19,20 frei drehbar (Freilauf). Dabei macht Fig. 1 deutlich, daß im Inneren der Nabenachse 1 trotz der Schaltschieber 50,58 und 66 genügend Platz ist, um die Nockenwelle 76 unterzubringen.

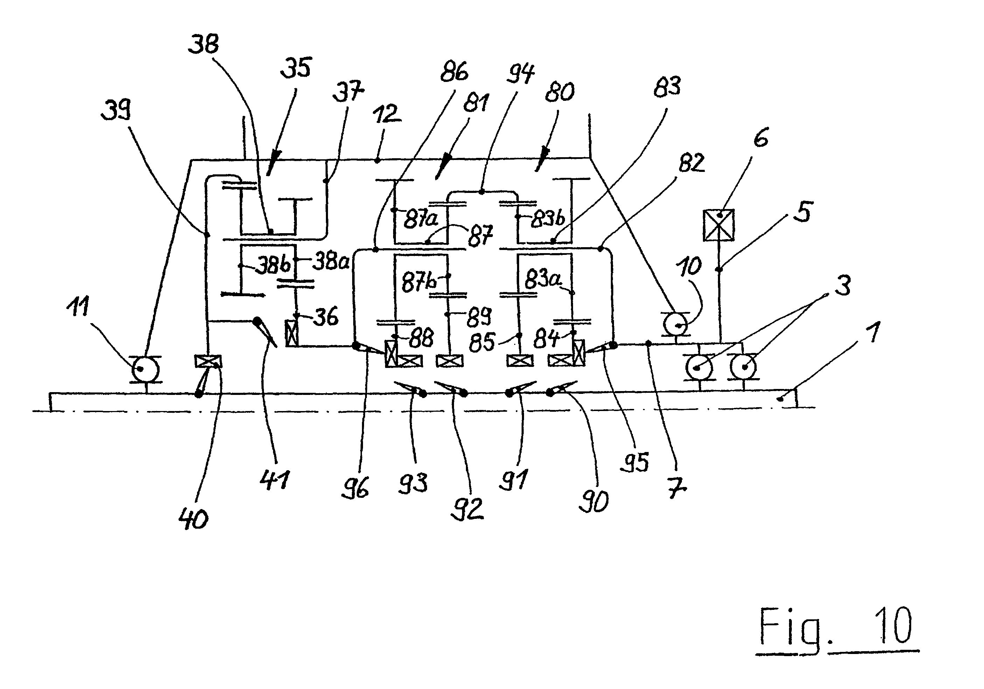

Die Ausführungsform nach Fig. 10 unterscheidet sich von der Ausführungsform nach Fig. 1 bis 9, die bisher als die beste Ausführungsform empfunden wird, nur teilweise, weshalb in Fig. 10 soweit wie möglich für gleiche Teile dieselben Bezugszeichen verwendet sind.

In der Nabenhülse 12 ist wiederum ein Schaltgetriebe gelagert, das zwei auf der Nabenachse 1 hintereinander angeordnete Planetengetriebe 80 und 81 enthält. Das erste, auf der Antriebsseite und in der Nähe des Antreibers 7 gelegene Planetengetriebe 80 enthält einen ersten Planetenträger 82 mit wenigstens einem ersten Planetenrad 83, das wenigstens zwei Stufen 83a,83b mit unterschiedlichen Durchmessern aufweist, wobei die Stufe 83a einen größeren Durchmesser aufweist und mit einem ersten Sonnenrad 84 von vergleichsweise kleinem Durchmesser kämmt, während die den kleineren Durchmesser aufweisende Stufe 83b mit einem zweiten Sonnenrad 85 im Eingriff ist, das einen entsprechend größeren Durchmesser besitzt. Das vom Antreiber 7 axial weiter entfernt liegende zweite Planetengetriebe 81 enthält einen zweiten Planetenträger 86 mit wenigstens einem zweiten Planetenrad 87, das ebenfalls wenigstens zwei Stufen 87a,87b mit unterschiedlichen Durchmessern aufweist, wobei die Stufe 87a mit dem größeren Durchmesser mit einem dritten Sonnenrad 88 von vergleichsweise kleinem Durchmesser und die den kleineren Durchmesser aufweisende Stufe 87b mit einem vierten Sonnenrad 89 im Eingriff ist, das einen entsprechend größeren Durchmesser besitzt.

Während der erste Planetenträger 82 dem Antrieb dient und zu diesem Zweck mit dem Antreiber 7 fest verbunden ist, ist der zweite Planetenträger 86 für den Abtrieb vorgesehen und zu diesem Zweck im Gegensatz zu Fig. 1 bis 9 je nachdem, ob ein Siebengang- oder Vierzehngang-Getriebe verwirklicht werden soll, entweder direkt mit der Nabenhülse 12 oder mit den anhand der Fig. 1 bis 9 ausführlich beschriebenen, das dritte Planetengetriebe 35 enthaltenden Nachschaltsatz verbunden. Zur Bereitstellung und Auswahl der verschiedenen Übersetzungsverhältnisse zwischen dem Antreiber 7 und der Nabenhülse 12 ist analog zu Fig. 1 bis 9 eine Schalteinrichtung vorgesehen, die Mittel 90, 91, 92 und 93 vorzugsweise in Form von Schaltkupplungen aufweist, mittels derer die Sonnenräder 84, 85, 88 und 89 wahlweise mit der Nabenachse 1 verbunden werden können. Ist zusätzlich ein Freilauf für die Nabenhülse 12 erwünscht, kann diese über einen entsprechenden Klinkenradträger od. dgl. mit dem Planetenträger 86 verbunden werden.

Nach einem besonderen Merkmal der Erfindung sind die beiden Planetengetriebe 80 und 81 nicht wie in Fig. 1 bis 9 durch einen gemeinsamen Steg, sondern durch ein gemeinsames, zur Nabenachse 1 koaxial angeordnetes Hohlrad 94 gekoppelt, das zwei fest miteinander verbundene Stufen aufweist, die mit je einer Stufe 83a,83b bzw. 87a,87b der ersten bzw. zweiten Planetenräder 83 bzw. 87 im Eingriff sind. Nach einer besonders bevorzugten Ausführungsform der Erfindung sind die beiden Planetengetriebe 80,81 wiederum spiegelbildlich zu einer gedachten, zwischen ihnen verlaufenden und senkrecht zur Nabenachse 1 liegenden Symmetrieebene aufgebaut und angeordnet, wobei die beiden Stufen des Hohlrads 94 im Ausführungsbeispiel mit den Planetenradstufen 83b und 87b im Eingriff sind. Im übrigen ist die Anordnung analog zu Fig. 1 bis 9, insbesondere im Hinblick auf die Ausbildung der verschiedenen Schaltkupplungen.

Ein Vorteil der Ausführungsform nach Fig. 10 besteht darin, daß das gemeinsame Hohlrad 94 als fliegend gelagerter, eine stufenlose Innenverzahnung aufweisender, rotierender Zahnring und damit sehr leicht und einstückig ausgebildet werden kann. Das Hohlrad 94 als im Durchmesser größtes Getriebeteil ist damit praktisch auf das Vorhandensein der Zähne reduziert und braucht keinerlei Wandteile und daran befestigte Kupplungselemente aufweisen, die eine wahlweise Kupplung mit dem Antreiber 7 oder einem anderen Getriebeteil ermöglichen.

Zur Herstellung verschiedener Gangstufen dienen zunächst die vier Schaltkupplungen 90 bis 93. Da der Antreiber 7 mit dem ersten Planetenträger 82 fest verbunden ist und der zweite Planetenträger 86 den Abtrieb bildet, werden mit den Schaltkupplungen 90 und 92 z.B. das erste und das dritte Sonnenrad 84,89 mit der Nabenachse 1 verbunden, während die Sonnenräder 85,88 frei rotieren können. Dadurch legt das erste Planetengetriebe 80 eine Drehzahl für das Hohlrad 94 fest, das seinerseits das Planetenrad 87 antreibt. Dieses wälzt sich auf dem feststehenden dritten Sonnenrad 89 ab, das dadurch eine Drehzahl für den zweiten Planetenträger 86 festlegt. Eine weitere Gesamtübersetzung ist dadurch herstellbar, daß die Schaltkupplungen 91,93 ein- und die Schaltkupplungen 90,92 ausgeschaltet werden, so daß jetzt die mit der Nabenachse 1 verbundenen Sonnenräder 85,88 das Gesamtübersetzungsverhältnis festlegen. Weitere Übersetzungsverhältnisse könnten dadurch erhalten werden, daß die Sonnenräder 84,88 bzw. 85,89 mit der Nabenachse 1 verbunden werden. Bei spiegelsymmetrischem Aufbau der beiden Planetengetriebe 80,81 führt das allerdings jeweils zu einem Gesamtübersetzungsverhältnis von 1 : 1, d.h. einer direkten Gangstufe.

Zur Vergrößerung der Zahl der Gangstufen trotz Anwendung des gemeinsamen Hohlrads 94 weist die Schalteinrichtung nach einem weiteren, besonders wesentlichen Merkmal der Erfindung und analog zu Fig. 1 bis 9 zwei weitere Schaltkupplungen 95 und 96 auf, von denen die Schaltkupplung 95 zur wahlweisen Verbindung des ersten Planetenträgers 82 mit dem ersten Sonnenrad 84 dient, während mit der zweiten Schaltkupplung 96 der zweite Planetenträger 86 wahlweise mit dem vierten Sonnenrad 88 kuppelbar ist (Fig. 10). Dadurch wird bei eingeschalteter Schaltkupplung 95 das erste Planetengetriebe 80 und bei eingeschalteter Schaltkupplung 96 das zweite Planetengetriebe 81 blockiert, d.h. das Hohlrad 94 dreht bei eingeschalteter Schaltkupplung 95 stets mit der Drehzahl des Antreibers 7, während bei eingeschalteter Schaltkupplung 96 der zweite Planetenträger 86 stets mit der Drehzahl des Hohlrads 94 umläuft. Die beiden Schaltkupplungen 95,96 werden vorzugsweise wie die oben erläuterten Schaltkupplungen 31 bis 32 (Fig. 1 bis 9) ausgebildet.

Mit den Schaltkupplungen 95,96 lassen sich bei spiegelsymmetrischem Aufbau der Planetengetriebe 80,81 zusätzlich zu den beiden oben beschriebenen Gangstufen weitere Gangstufen wie folgt einstellen: Ist die Schaltkupplung 95 ein- und die Schaltkupplung 96 ausgeschaltet, dann kann mit den Schaltkupplungen 92,93 wahlweise das Sonnenrad 89 oder das Sonnenrad 88 mit der Nabenachse 1 verbunden und das jeweils andere Sonnenrad freigegeben werden, was zwei vom zweiten Planetengetriebe 81 bestimmte Übersetzungsverhältnisse zwischen dem Hohlrad 94 und dem Planetenträger 86 liefert, weil das Übersetzungsverhältnis des ersten Planetengetriebes 1 : 1 beträgt. Ist dagegen die Schaltkupplung 96 ein- und die Schaltkupplung 95 ausgeschaltet, liegt das Übersetzungsverhältnis des zweiten Planetengetriebes 81 mit 1 : 1 fest, während zwei durch das erste Planetengetriebe 80 festgelegte Übersetzungsverhältnisse zwischen dem Antreiber 7 und dem Hohlrad 94 dadurch eingestellt werden können, daß mittels der Schaltkupplungen 90,91 wahlweise eines der Sonnenräder 84,85 mit der Nabenachse 1 verbunden wird. Schließlich läßt sich durch Einschalten beider Schaltkupplungen 95,96 auch auf diese Weise ein Übersetzungsverhältnis von 1 : 1 zwischen dem Antreiber 7 und dem Planetenträger 86 herstellen. Insgesamt ist die aus den Planetengetrieben 80,81 gebildetet Mehrgangnabe daher eine Siebengang-Getriebenabe.

Ein besonderes Kennzeichen der Schaltkupplungen 95,96 besteht wie bei den Schaltkupplungen 31,32 darin, daß mit ihnen die Sonnenräder 84,88 zusätzlich zum zugehörigen Planetenträger 82 bzw. 86 und nicht anstelle von diesem mit dem Antreiber 7 bzw. der Nabenhülse 12 bzw. dem Nachschaltsatz verbunden werden. Dadurch wird bei Betätigung der Schaltkupplungen 95,96 immer nur ein Teil der vom Antreiber 7 kommenden bzw. auf die Nabenhülse 12 ausgeübten An- oder Abtriebskraft umgeschaltet, und die Umschaltung dient allein dem Zweck, das jeweilige Planetengetriebe zu blockieren oder die Blockierung aufzuheben. Wegen der speziellen Konfiguration des beschriebenen Schaltgetriebes nach Fig. 10 kann erreicht werden, daß z.B. nur ca. 35 % der Gesamtkraft zu schalten sind.

Das Schaltgetriebe nach Fig. 10 kann mit denselben Zähnezahlen wie das Schaltgetriebe nach Fig. 5 und 6 betrieben werden, wobei die großen bzw. kleinen Planetenradstufen 83a,87a bzw. 83b,87b dieselben Zähnezahlen wie die großen bzw. kleinen Planetenradstufen 18b,21b bzw. 18a,21a aufweisen. Entsprechendes gilt für die zugehörigen Sonnenräder. Ein Unterschied besteht lediglich darin, daß hier das erste Planetengetriebe 80 stets als Übersetzungsgetriebe und das zweite Planetengetriebe 81 stets als Untersetzungsgetriebe arbeitet. Insbesondere ergibt sich dann, daß die Übersetzungsverhältnisse des Planetengetriebes 80 ca. 0,774 bei eingeschalteter Schaltkupplung 90 und ca. 0,682 bei eingeschalteter Schaltkupplung 91 betragen, während die Übersetzungsverhältnisse des Planetengetriebes 81 ca. 1,467 bei eingeschalteter Schaltkupplung 92 und ca. 1,292 bei eingeschalteter Schaltkupplung 93 sind. Dadurch lassen sich bei analoger Anwendung der verschiedenen Schaltkupplungen dieselben Gangstufen und Gangsprünge erhalten, wie oben anhand der Tabelle 2 in Verbindung mit dem Schaltgetriebe nach Fig. 1 bis 9 ausführlich erläutert wurde und in der nachfolgenden Tabelle 3 dargestellt ist:

**Tabelle 3**

| Gangstufe | Schaltkupplung | | | | | | | Übersetzung | Stufensprung |
|---|---|---|---|---|---|---|---|---|---|
| | 90 | 91 | 92 | 93 | 95 | 96 | 41 | | |
| 1. Gang | | | X | | X | | | 3,591 | 13,5 % |
| 2. Gang | | | | X | X | | | 3,163 | 13,8 % |
| 3. Gang | X | | X | | | | | 2,779 | 13,5 % |
| 4. Gang | | | | | X | X | | 2,448 | 13,5 % |
| 5. Gang | | X | | X | | | | 2,157 | 13,8 % |
| 6. Gang | X | | | | | X | | 1,895 | 13,5 % |
| 7. Gang | | X | | | | X | | 1,670 | 13,8 % |
| 8. Gang | | | X | | X | | X | 1,467 | 13,5 % |
| 9. Gang | | | | X | X | | X | 1,292 | 13,8 % |
| 10. Gang | X | | X | | | | X | 1,135 | 13,5 % |
| 11. Gang | | | | | X | X | X | 1,000 | 13,5 % |
| 12. Gang | | X | | X | | | X | 0,881 | 13,8 % |
| 13. Gang | X | | | | | X | X | 0,774 | 13,5 % |
| 14. Gang | | X | | | | X | X | 0,682 | - |

Im übrigen ergeben sich dieselben Vorteile wie bei Anwendung des Schaltgetriebes nach Fig. 1 bis 9.

Die Erfindung ist nicht auf die beschriebenen Ausführungsbeispiele beschränkt, die auf vielfache Weise abgewandelt werden können. Insbesondere ist es möglich, den beiden ersten Planetengetrieben 15,16 bzw. 80,81 mehr als zwei Sonnenräder und entsprechend den zugehörigen Planetenrädern mehr als zwei Stufen zuzuordnen, um dadurch weitere Übersetzungsverhältnisse vorzusehen. Weiter ist es möglich und vorteilhaft, den Antreiber 7 und das Hohlrad 24 oder den Planetenträger 82 und ggf. auch das Hohlrad 25 oder den Planetenträger 86 und das Sonnenrad 36 jeweils aus einem Stück herzustellen. Weiter kann die Überbrückung der beiden Planetengetriebe 15,16 bzw. 80,81 mit Hilfe der Schaltkupplungen 31,32 bzw. 95,96 auch dann vorgesehen werden, wenn die Sonnenräder und die zugehörigen Planetenradstufen nicht symmetrisch aufgebaut sind. Weiter könnten die Sonnenräder mit einem anderen feststehenden Teil als der Nabenachse 1 verbunden werden. Außerdem können andere als die angegebenen Zähnezahlen angewählt werden, die nur als Beispiele aufzufassen sind. Ferner ergeben sich die meisten der angeführten Vorteile unabhängig davon, welche Art von Schalteinrichtung für die Verbindung der Hohlräder 24,25 bzw. der Planetenträger 82,86 mit dem zugehörigen Sonnenrad Verwendung finden. Insbesondere können für diese Zwecke z.B. Zahnkupplungen, Klauenkupplungen, Klinkenfreiläufe, Klemmrollenfreiläufe und/oder Klemmkörperfreiläufe eingesetzt werden, die auch unabhängig davon wirksam sind, ob sich innerhalb der Getriebenabe Bauteile wie z.B. eine Bremse befinden, die zusätzliche Funktionen bewirken. Weiter ist die Erfindung nicht auf den beschriebenen Nachschaltsatz mit dem Planetengetriebe 35 beschränkt. Vielmehr könnte die Anordnung beispielsweise auch so getroffen sein, daß in Fig. 5 bzw. 10 die Schaltkupplung 41 zwischen dem Hohlrad 25 bzw. dem Planetenträger 86 und dem Planetenträger 37 des Planetengetriebes 35 angeordnet wird. Auch in diesem Fall würde das Planetengetriebe 35 bei ausgeschalteter Schaltkupplung 41 als Untersetzungsgetriebe und bei eingeschalteter Schaltkupplung 41 als direkte Übersetzung (1 : 1) wirken. Weiter wäre es möglich, das Planetengetriebe 35 als Vorschaltsatz zu verwenden und zwischen dem Antreiber 7 und dem ersten Planetengetriebe 15 bzw. 80 anzuordnen. Abgesehen davon ist das erfindungsgemäße Mehrgang-Getriebe nicht auf die Anwendung innerhalb einer Nabe eines Rades beschränkt. Insbesondere könnte das Getriebe z.B. auch als Zwischenwellen-Getriebe verwendet und zu diesem Zweck z.B. an einem Ort zwischen dem Tretlager und der Nabe eines der beiden Räder eines Fahrrades angeordnet sein, in welchem Fall es über entsprechende Zahnräder, Ketten und dgl. auf der Antriebsseite mit dem Tretlager und auf der Abtriebsseite mit einem Rad verbunden werden könnte. Selbst die Anwendung des Getriebes innerhalb des Tretlagers wäre denkbar. Schließlich versteht sich, daß die verschiedenen Merkmale auch in anderen als den beschriebenen und in den Zeichnungen dargestellten Kombinationen angewendet werden können.

## Patentansprüche

1. Mehrgang-Getriebe für Fahrräder, enthaltend: eine an einem Fahrradrahmen drehfest montierbare Achse (1), einen drehbar auf der Achse (1) gelagerten Antreiber (7), eine drehbar auf der Achse (1) gelagerte Hülse (12), ein mit einem ersten und einem zweiten Planetengetriebe (15,16 bzw. 80,81) versehenes, in der Hülse (12) angeordnetes und mit dem Antreiber (7) und der Hülse (12) gekoppeltes Schaltgetriebe zur Bereitstellung von mehreren Übersetzungsverhältnissen zwischen dem Antreiber (7) und der Hülse (12), wobei die Planetengetriebe (15,16 bzw. 80,81) wenigstens je zwei zur Achse (1) koaxiale Sonnenräder (19,20;22,23 bzw. 84,85;88,89), wenigstens einen Planetenträger (17;82,86) mit entsprechend abgestuften, mit den Sonnenrädern (19,20;22,23 bzw. 84,85;88,89) im Eingriff befindlichen Planetenrädern (18,21 bzw. 83,87) und wenigstens ein mit den Planetenrädern (18,21 bzw. 83,87) im Eingriff befindliches Hohlrad (24,25 bzw. 94) aufweisen, und eine Schalteinrichtung zur Auswahl der Übersetzungsverhältnisse durch wahlweises Verbinden der Sonnenräder (19,20;22,23 bzw. 84,85;88,89) mit der Achse (1), **dadurch gekennzeichnet, daß** die Schalteinrichtung Mittel (31,32 bzw. 95,96) zur wahlweisen Verbindung des Hohlrads (24,25) oder des Planetenträger (82,86) des ersten und/oder zweiten Planetengetriebes (15,16 bzw. 80,81) mit einem Sonnenrad (19,22 bzw. 84,88) desselben Planetengetriebes (15,16 bzw. 80,81) aufweist.

2. Mehrgang-Getriebe nach Anspruch 1, **dadurch gekennzeichnet, daß** das Mittel (31,32 bzw. 95,96) eine Schaltkupplung mit einem Freilauf enthält.

3. Mehrgang-Getriebe nach Anspruch 1 oder 2, **dadurch gekennzeichnet, daß** die Hohlräder (94) der beiden Planetengetriebe (80,81) fest miteinander verbunden sind.

4. Mehrgang-Getriebe nach Anspruch 3, **dadurch gekennzeichnet, daß** die beiden Hohlräder aus einem einstöckig hergestellten Bauteil bestehen und ein beiden Planetengetrieben (80,81) gemeinsames Hohlrad (94) bilden.

5. Mehrgang-Getriebe nach Anspruch 1 oder 2, **dadurch gekennzeichnet, daß** die Planetenträger der beiden Planetengetriebe (15,16) fest miteinander verbunden sind.

6. Mehrgang-Getriebe nach Anspruch 5, **dadurch gekennzeichnet, daß** die beiden Planetenträger aus einem einstückig hergestellten Bauteil bestehen und einen beiden Planetengetrieben (15,16) gemeinsamen Planetenträger (17) bilden.

7. Mehrgang-Getriebe nach einem der Ansprüche 1 bis 6, **dadurch gekennzeichnet, daß** die beiden Planetengetriebe (15,16 bzw. 80,81) je zwei Sonnenräder (19,20;22,23 bzw. 84,85;88,89) mit unterschiedlichen Durchmessern aufweisen.

8. Mehrgang-Getriebe nach Anspruch 7, **dadurch gekennzeichnet, daß** die beiden Sonnenräder (19,20;22,23 bzw. 84,85;88,89) jedes Planetengetriebes (15,16 bzw. 80,81) paarweise identisch ausgebildet sind.

9. Mehrgang-Getriebe nach Anspruch 7 oder 8, **dadurch gekennzeichnet, daß** das gemeinsame Hohlrad (94) der Planetengetriebe (80,81) mit denjenigen Stufen (83b,87b) der zugehörigen Planetenräder (83,87) im Eingriff ist, die die kleineren Durchmesser aufweisen.

10. Mehrgang-Getriebe nach Anspruch 7 oder 8, **dadurch gekennzeichnet, daß** die beiden Hohlräder (24,25) der Planetengetriebe (15,16) mit denjenigen Stufen (18a,21a) der zugehörigen Planetenräder (18,21) im Eingriff sind, die die kleineren Durchmesser aufweisen.

11. Mehrgang-Getriebe nach einem der Ansprüche 7 bis 10, **dadurch gekennzeichnet, daß** die beiden Planetengetriebe (15,16 bzw. 80,81) spiegelbildlich aufgebaut und angeordnet sind.

12. Mehrgang-Getriebe nach einem der Ansprüche 3,4 und 7 bis 11, **dadurch gekennzeichnet, daß** der Antrieb des Schaltgetriebes über den Planetenträger (82) des ersten Planetengetriebes (80) und der Abtrieb des Schaltgetriebes über den Planetenträger (86) des zweiten Planetengetriebes (81) erfolgt.

13. Mehrgang-Getriebe nach Anspruch 12, **dadurch gekennzeichnet, daß** beide Planetenträger (82,86) wahlweise mit dem Sonnenrad (84,88) des zugehörigen Planetengetriebes (80,81) verbindbar sind.

14. Mehrgang-Getriebe nach einem der Ansprüche 5 bis 11, **dadurch gekennzeichnet, daß** der Antrieb des Schaltgetriebes über das Hohlrad (24) des ersten Planetengetriebes (15) und der Abtrieb des Schaltgetriebes über das Hohlrad (25) des zweiten Planetengetriebes (16) erfolgt.

15. Mehrgang-Getriebe nach Anspruch 14, **dadurch gekennzeichnet, daß** beide Hohlräder (24,25) wahlweise mit dem Sonnenrad (19,22) des zugehörigen Planetengetriebes (15,16) verbindbar sind.

16. Mehrgang-Getriebe nach einem der Ansprüche 1 bis 15, **dadurch gekennzeichnet, daß** es als Siebengang-Getriebe eingerichtet ist.

17. Mehrgang-Getriebe nach einem der Ansprüche 1 bis 16, **dadurch gekennzeichnet, daß** die beiden Planetengetriebe (15,16 bzw. 80,81) in Reihe geschaltet sind und dabei das eine Planetengetriebe (16 bzw. 80) ein Übersetzungsverhältnis kleiner als Eins und das zweite Planetengetriebe (15 bzw. 81) ein Übersetzungsverhältnis größer als Eins aufweist.

18. Mehrgang-Getriebe nach einem der Ansprüche 1 bis 17, **dadurch gekennzeichnet, daß** dem zweiten Planetengetriebe (16 bzw. 81) ein drittes Planetengetriebe (35) nachgeschaltet ist, das ein fünftes Sonnenrad (36), einen dritten Planetenträger (37) mit wenigstens einem dritten Planetenrad (38) und ein Hohlrad (39) aufweist.

19. Mehrgang-Getriebe nach Anspruch 18, **dadurch gekennzeichnet, daß** der dritte Planetenträger (37) mit der Hülse (12), das zweite Hohlrad (39) über einen Freilauf (40) mit der Achse (1) und das fünfte Sonnenrad (36) mit dem zweiten Planetenträger (86) oder dem zweiten Hohlrad (25) des zweiten Planetengetriebes (16 bzw. 81) verbunden ist.

20. Mehrgang-Getriebe nach Anspruch 19, **dadurch gekennzeichnet, daß** die Schalteinrichtung mit Mitteln (41) zur wahlweisen Verbindung des zweiten Planetenträgers (86) oder des zweiten Hohlrads (25) mit dem Hohlrad (39) des dritten Planetengetriebes (35) versehen ist.

21. Mehrgang-Getriebe nach Anspruch 20, **dadurch gekennzeichnet, daß** das Mittel (41) eine Schaltkupplung mit einem Freilauf enthält.

22. Mehrgang-Getriebe nach einem der Ansprüche 1 bis 21, **dadurch gekennzeichnet, daß** es als Mehrgang-Getriebenabe ausgebildet ist, wobei die Achse (1) eine Nabenachse und die Hülse (12) eine Nabenhülse ist.

## Claims

1. Multispeed gear system for bicycles, containing: an axle (1) which can be mounted, fixed against rotation, on a bicycle frame, a driving means (7) which is rotatably mounted on the axle (1), a sleeve (12) which is rotatably mounted on the axle (1), a gear-shifting mechanism which is provided with a first and a second planetary gear system (15,16 or 80,81), is arranged in the sleeve (12) and is coupled to the driving means (7) and the sleeve (12) to make available at least two transmission ratios between the driving means (7) and the sleeve (12), the planetary gear systems (15,16 or 80,81) each having at least two sun wheels (19,20;22,23 or 84,85;88,89) coaxial with the axle (1), at least one planet carrier (17;82,86) with correspondingly graded planet wheels (18,21 or 83,87) in engagement with the sun wheels (19,20;22,23 or 84,85;88,89) and at least one ring gear (24,25 or 94) in engagement with the planet wheels (18,21 or 83,87), and a shifting device for selecting the transmission ratios by selective connection of the sun wheels (19,20;22,23 or 84,85;88,89) with the axle (1), **characterised in that** the shifting device has means (31,32 or 95,96) for the selective connection of the ring gear (24,25) or of the planet carrier (82,86) of the first and/or second planetary gear system (15,16 or 80,81) with a sun wheel (19,22 or 84,88) of the same planetary gear system (15,16 or 80,81).

2. Multispeed gear system according to claim 1, **characterised in that** the means (31,32 or 95,96) contain a clutch with a free-wheel.

3. Multispeed gear system according to claim 1 or 2, **characterised in that** the ring gears (94) of the two planetary systems (80,81) are securely connected to one another.

4. Multispeed gear system according to claim 3, **characterised in that** the two ring gears consist of a structural part produced as one piece and form a ring gear (94) which is common to both planetary gear systems (80,81).

5. Multispeed gear system according to claim 1 or 2, **characterised in that** the planet carriers of the two planetary gear systems (15,16) are securely connected to one another.

6. Multispeed gear system according to claim 5, **characterised in that** the two planet carriers consist of a structural part produced as one piece and form a planet carrier (17) which is common to both planetary gear systems (15,16).

7. Multispeed gear system according to one of claims 1 to 6, **characterised in that** the two planetary gear systems (15,16 or 80,81) each have two sun wheels (19,20;22,23 or 84,85;88,89) which have different diameters.

8. Multispeed gear system according to claim 7, **characterised in that** the two sun wheels (19,20;22,23 or 84,85;88,89) of each planetary gear system (15,16 or 80,81) are configured identical in pairs.

9. Multispeed gear system according to claim 7 or 8, **characterised in that** the common ring gear (94) of the planetary gear systems (80,81) engages with those steps (83b,87b) of the associated planet wheels (83,87) which have the smaller diameters.

10. Multispeed gear system according to claim 7 or 8, **characterised in that** the two ring gears (24,25) of the planetary systems (15,16) engage with those steps (18a,21a) of the associated planet wheels (18,21) which have the smaller diameters.

11. Multispeed gear system according to one of claims 7 to 10, **characterised in that** the two planetary gear systems (15,16 or 80,81) are constructed and arranged in a mirror-inverted manner.

12. Multispeed gear system according to one of claims 3,4 and 7 to 11, **characterised in that** the gear-shifting mechanism is driven via the planet carrier (82) of the first planetary gear system (80) and the power take-off from the gear-shifting mechanism takes place via the planet carrier (86) of the second planetary gear system (81).

13. Multispeed gear system according to claim 12, **characterised in that** both the planet carriers (82,86) can be selectively connected with the sun wheel (84,88) of the associated planetary gear system (80,81).

14. Multispeed gear system according to one of claims 5 to 11, **characterised**
**in that** the gear-shifting mechanism is driven via the ring gear (24) of the first planetary gear system (15) and the power take-off from the gear mechanism takes place via the ring gear (25) of the second planetary gear system (16).

15. Multispeed gear system according to claim 14, **characterised in that** both the ring gears (24,25) can be selectively connected with the sun wheel (19,22) of the associated planetary gear system (15,16).

16. Multispeed gear system according to one of claims 1 to 15, **characterised in that** it is set up as a 7-gear system.

17. Multispeed gear system according to one of claims 1 to 16, **characterised in that** the two planetary gear systems (15,16 or 80,81) are connected in series and the one planetary gear system (16 or 80) has a transmission ratio which is smaller than one and the second planetary gear system (15 or 18) has a transmission ratio which is greater than one.

18. Multispeed gear system according to one of claims 1 to 17, **characterised in that** a third planetary gear system (35) is connected after the second planetary gear system (16 or 81), said third system (35) having a fifth sun wheel (36), a third planet carrier (37), with at least a third planet wheel (38), and a ring gear (39).

19. Multispeed gear system according to claim 18, **characterised in that** the third planet carrier (37) is connected with the sleeve (12), the second ring (39) via a free-wheel (40) with the axle (1) and the fifth sun wheel (36) with the second planet carrier (86) or with the second ring gear (25) of the second planetary gear system (16 or 81).

20. Multispeed gear system according to claim 19, **characterised in that** the gear-shifting device is provided with means (41) for selectively connecting the second planet carrier (86) or the second ring gear (25) with the ring gear (39) of the third planetary gear system (35).

21. Multispeed gear system according to claim 20, **characterised in that** the means (41) contains a clutch with a free-wheel.

22. Multispeed gear system according to one of claims 1 to 21, **characterised in that** that it is configured as a multispeed gear hub, the axle (1) being a hub axle and the sleeve (12) a hub shell.

## Revendications

1. Mécanisme de propulsion ou transmission à plusieurs vitesses pour bicyclettes comprenant : un axe (1) fixe en rotation pouvant être monté sur un cadre de bicyclette, un pédalier (7) monté de façon rotative sur l'axe (1), une douille (12) montée de façon rotative sur l'axe (1), un mécanisme de changement de braquet logé dans la douille (12) et accouplé au pédalier (7) et à la douille (12), qui est doté d'un premier et d'un second engrenage planétaire (respectivement 15, 16 et 80, 81) et qui est destiné à créer plusieurs rapports de multiplication entre le pédalier (7) et la douille (12), sachant que les engrenages planétaires (respectivement 15, 16 et 80, 81) comprennent chacun au moins deux roues solaires (respectivement 19, 20 ; 22, 23 et 84, 85 ; 88, 89) coaxiales par rapport à l'axe (1), au moins un porte-pignons (17 ; 82, 86) équipé de pignons satellites (respectivement 18, 21 et 83, 87) étagés de façon correspondante et engrenant avec les roues solaires (respectivement 19, 20 ; 22, 23 et 84, 85 ; 88, 89), et au moins une roue à denture intérieure (respectivement 24, 25 et 94) engrenant avec les pignons satellites (respectivement 18, 21 et 83, 87), et comprenant un dispositif de commande pour sélectionner les rapports de multiplication en reliant facultativement les roues solaires (respectivement 19, 20 ; 22, 23 et 84, 85 ; 88, 89) à l'axe (1), **caractérisé en ce que** le dispositif de commande présente des moyens (respectivement 31, 32 et 95, 96) pour relier facultativement la roue à denture intérieure (24, 25) ou le porte-pignon (82, 86) du premier et/ou du second engrenage planétaire (respectivement 15, 16 et 80, 81) à une roue solaire (respectivement 19, 22 et 84, 88) de ce même engrenage planétaire (respectivement 15, 16 et 80, 81).

2. Mécanisme de propulsion à plusieurs vitesses selon la revendication 1, **caractérisé en ce que** le moyen (respectivement 31, 32 et 95, 96) comprend un accouplement avec un dispositif à roue libre.

3. Mécanisme de propulsion à plusieurs vitesses selon la revendication 1 ou 2, **caractérisé en ce que** les roues à denture intérieure (94) des deux engrenages planétaires (80, 81) sont reliées fixement entre elles.

4. Mécanisme de propulsion à plusieurs vitesses selon la revendication 3, **caractérisé en ce que** les deux roues à denture intérieure sont constituées d'une pièce d'un seul tenant et forment une roue à denture intérieure (94) commune aux deux engrenages planétaires (80, 81)

5. Mécanisme de propulsion à plusieurs vitesses selon la revendication 1 ou 2, **caractérisé en ce que** les porte-pignons des deux engrenages planétaires (15, 16) sont reliés fixement entre eux.

6. Mécanisme de propulsion à plusieurs vitesses selon la revendication 5, **caractérisé en ce que** les deux porte-pignons sont constitués d'une pièce d'un seul tenant et forment un porte-pignons (17) commun aux deux engrenages planétaires (15, 16).

7. Mécanisme de propulsion à plusieurs vitesses selon l'une des revendications 1 à 6, **caractérisé en ce que** les deux engrenages planétaires (respectivement 15, 16 et 80, 81) présentent chacun deux roues solaires (respectivement 19, 20 ; 22, 23 et 84, 85 ; 88, 89) de diamètres différents.

8. Mécanisme de propulsion à plusieurs vitesses selon la revendication 7, **caractérisé en ce que** les deux roues solaires (respectivement 19, 20 ; 22, 23 et 84, 85 ; 88, 89) de chaque engrenage planétaire (respectivement 15, 16 et 80, 81) sont deux à deux identiques.

9. Mécanisme de propulsion à plusieurs vitesses selon la revendication 7 ou 8, **caractérisé en ce que** la roue à denture intérieure commune (94) des engrenages planétaires (80,81) engrène avec les braquets (83b, 87b) des pignons satellites associés (83, 87) qui ont les diamètres les plus petits.

10. Mécanisme de propulsion à plusieurs vitesses selon la revendication 7 ou 8, **caractérisé en ce que** les deux roues à denture intérieure (24, 25) des engrenages planétaires (15, 16) engrènent avec les braquets (18a, 21a) des pignons satellites associés (18, 21) qui ont le diamètre le plus petit.

11. Mécanisme de propulsion à plusieurs vitesses selon l'une des revendications 7 à 10, **caractérisé en ce que** les deux engrenages planétaires (respectivement 15, 16 et 80, 81) sont conçus et disposés en miroir.

12. Mécanisme de propulsion à plusieurs vitesses selon l'une des revendications 3, 4 et 7 à 11, **caractérisé en ce que** le mécanisme de changement de braquet est sollicité à l'entrée par le porte-pignons (82) du premier engrenage planétaire (80) et sollicite à la sortie le porte-pignons (86) du second engrenage planétaire (81).

13. Mécanisme de propulsion à plusieurs vitesses selon la revendication 12, **caractérisé en ce que** les deux porte-pignons (82, 86) peuvent être reliés facultativement à la roue solaire (84, 88) de l'engrenage planétaire associé (80, 81).

14. Mécanisme de propulsion à plusieurs vitesses selon l'une des revendications 5 à 11, **caractérisé en ce que** le mécanisme de changement de braquet est sollicité à l'entrée par la roue à denture intérieure (24) du premier engrenage planétaire (15) et sollicite à la sortie la roue à denture intérieure (25) du second engrenage planétaire (16)

15. Mécanisme de propulsion à plusieurs vitesses selon la revendication 14, **caractérisé en ce que** les deux roues à denture intérieure (24, 25) peuvent être reliées facultativement à la roue solaire (19, 22) de l'engrenage planétaire associé (15, 16).

16. Mécanisme de propulsion à plusieurs vitesses selon l'une des revendications 1 à 15, **caractérisé en ce qu'**il est conçu comme un engrenage à sept rapports.

17. Mécanisme de propulsion à plusieurs vitesses selon l'une des revendications 1 à 16, **caractérisé en ce que** les deux engrenages planétaires (respectivement 15, 16 et 80, 81) sont montés en série, et **en ce que** l'un des engrenages planétaires (16 ou 80) présente un rapport de multiplication inférieur à un et le second engrenage planétaire (15 ou 81) un rapport de multiplication supérieur à un.

18. Mécanisme de propulsion à plusieurs vitesses selon l'une des revendications 1 à 17, **caractérisé en ce qu'**un troisième engrenage planétaire (35) est monté en aval du second engrenage planétaire (16 ou 81), qui présente une cinquième roue solaire (36), un troisième porte-pignons (37) avec au moins un troisième pignon satellite (38) et une roue à denture intérieure (39).

19. Mécanisme de propulsion à plusieurs vitesses selon la revendication 18, **caractérisé en ce que** le troisième porte-pignons (37) est relié à la douille (12), la seconde roue à denture intérieure (39) à l'arbre (1) par le biais d'un dispositif à roue libre (40), et la cinquième roue solaire (36) au second porte-pignons (86) ou à la seconde roue à denture intérieure (25) du second engrenage planétaire (16 ou 81).

20. Mécanisme de propulsion à plusieurs vitesses selon la revendication 19, **caractérisé en ce que** le dispositif de changement de braquet est doté de moyens (41) pour relier facultativement le second porte-pignons (86) ou la seconde roue à denture intérieure (25) à la première roue à denture intérieure (39) du troisième engrenage planétaire (35).

21. Mécanisme de propulsion à plusieurs vitesses selon la revendication 20, **caractérisé en ce que** le moyen (41) comprend un accouplement avec un dispositif à roue libre.

22. Mécanisme de propulsion à plusieurs vitesses selon l'une des revendications 1 à 21, **caractérisé en ce qu'**il est réalisé en tant que moyeu de mécanisme de propulsion ou de transmission à plusieurs vitesses, l'axe (1) étant un axe de moyeu et la douille (12) une douille de moyeu.
